# EUROPEAN PATENT SPECIFICATION

(11) **EP 1 302 269 B1**
(45) Date of publication and mention of the grant of the patent: **15.08.2007**
(21) Application number: 02256852.1
(22) Date of filing: 02.10.2002
(51) Int. Cl.: B23K 9/04

(54) **Apparatus and method for forming a body**
Vorrichtung und Verfahren zum Aufbauen eines Werkstückes
Appareil et procédé de formation d'une pièce

(30) Priority: 16.10.2001 GB 0124762
(43) Date of publication of application: 16.04.2003
(73) Proprietor: ROLLS-ROYCE PLC, London, SW1E 6AT (GB)
(72) Inventor: Pratt, Anthony Lionel, Puckelchurch, Bristol BS16 9RW (GB); Jones, Steven Alan, Hilton, Derby DE65 5HN (GB)

(56) References cited:
- US-A- 5 233 150
- PATENT ABSTRACTS OF JAPAN vol. 004, no. 161 (M-040), 11 November 1980 (1980-11-11) & JP 55 112178 A (SUMITOMO METAL IND LTD; others: 01), 29 August 1980 (1980-08-29)

## Description

This invention relates to an apparatus and method for forming a body by deposition of a weld material, of the kind disclosed in US-A-5 233 150.

The formation of components for aerospace engines can be carried out by any of several techniques involving deposition of a weld material. These techniques utilise an apparatus including two electrodes, the first electrode being held in a welding head to which is fed a supply of a metal wire constituting the weld material. The second electrode is in the form of a substrate or foundation upon which the weld material is to be deposited to form the component. The foundation may be in the form of a metal plate. A supply of an inert gas is fed to the welding head during its operation.

When the welding head and the foundation are connected to a supply of electricity, an arc is formed in the inert gas which melts the metal wire and a small region of the material forming the foundation. The metal is then deposited onto the foundation in a controlled manner. The welding head is mounted on a robotic arm and the foundation is mounted on a movable turntable. By controlling the movement of the arm and the turntable, the metal can be deposited on the foundation in order to form components of any desired shape.

One such method of forming components involves providing the welding head with a permanent electrode and also providing a separate metal wire to the welding head, the metal wire constituting the weld material. This method is generally known in the art as tungsten inert gas welding which is generally shortened to TIG welding. Although tungsten is commonly used, it will be appreciated by those skilled in the art that other suitable materials could be used as the electrode.

Another such method involves the use of a sacrificial electrode in the welding head. With this arrangement, the metal wire which provides the weld material also constitutes the electrode and is fed through the welding head. This method is generally known in the art as metal inert gas welding, which is generally shortened to MIG welding.

According to the invention there is provided apparatus for forming a body by the deposition of a weld material, the apparatus including:
a welding head;
a support member on which the body is to be deposited;
means for supplying a weld material to be deposited;
means for providing a flow of current between the welding head and a substrate in the form of the support member or the partially formed body, thereby melting the weld material and forming a molten weld pool in the substrate; and
means for providing an inert gas at a temperature of less than -50°C to a region of the substrate at or near to the weld pool, to rapidly cool that region of the substrate.

Preferably the means for providing the inert gas includes means for providing the gas at a temperature of less than -60°C. The means for providing the inert gas may include means for providing the gas at a temperature less than -95°C.0

Preferably the means for supplying a weld material to be deposited includes holding means associated with the welding head. Preferably the holding means includes means for holding an end of a wire of weld material in a region between the welding head and the substrate.

Preferably the apparatus includes means for moving the welding head relative to the substrate, in order to move the weld pool along the substrate. Preferably the weld pool includes a boundary defined by the interface between the molten material of the weld pool and the surrounding solid material. The boundary of the weld pool may include a front part and a rear part defined by the movement of the weld pool. The apparatus preferably includes means for providing the low temperature inert gas behind a rear part of the weld pool boundary. The inert gas may be provided to a region between 10mm and 25mm away from a centre of the weld pool.

The apparatus may include means for providing the low temperature inert gas to more than one region at or near the weld pool. At least one region may be within or in front of the weld pool.

The apparatus may include means for providing a turbulent flow of inert gas to the weld pool.

The means for providing the low temperature inert gas may include a heat exchanger. Preferably, at least two heat exchangers are provided.

According to a further aspect of the invention there is provided a method for forming a body by the deposition of a weld material, the method including the steps of:
providing a welding head;
providing a support member on which the weld material is to be deposited;
supplying a weld material to be deposited;
providing a flow of current between the welding head and a substrate in the form of the support member or the partially formed body, thereby melting the weld material and forming a molten weld pool in the substrate; and
providing an inert gas at a temperature of less than -50°C to a region near the weld pool, to rapidly cool the substrate material in that region.

Preferably the inert gas is provided at a temperature of less than -60°C. The inert gas may be provided at a temperature of less than -95°C.

Preferably an end of a wire of welding material is supplied to a region between the welding head and the substrate.

Preferably the method includes the step of moving the welding head relative to the substrate, so that the weld pool moves along the substrate.

Preferably the method includes the step of providing a turbulent flow of inert gas at a low temperature to the region at or near the weld pool.

Preferably the method includes the step of providing inert gas in such a region and at such a temperature that, for the particular weld material being used, it causes a rapid transition from one crystal structure to an alternative crystal structure. Where the weld material is a titanium alloy, the first crystal structure is preferably body centred cubic and the second crystal structure closed packed hexagonal.

An embodiment of the invention will now be described by way of example only with reference to the accompanying drawings in which:
Fig. 1 is a diagrammatic side view of an apparatus for forming a body; and
Fig. 2 is a diagrammatic representation of the process of the invention;

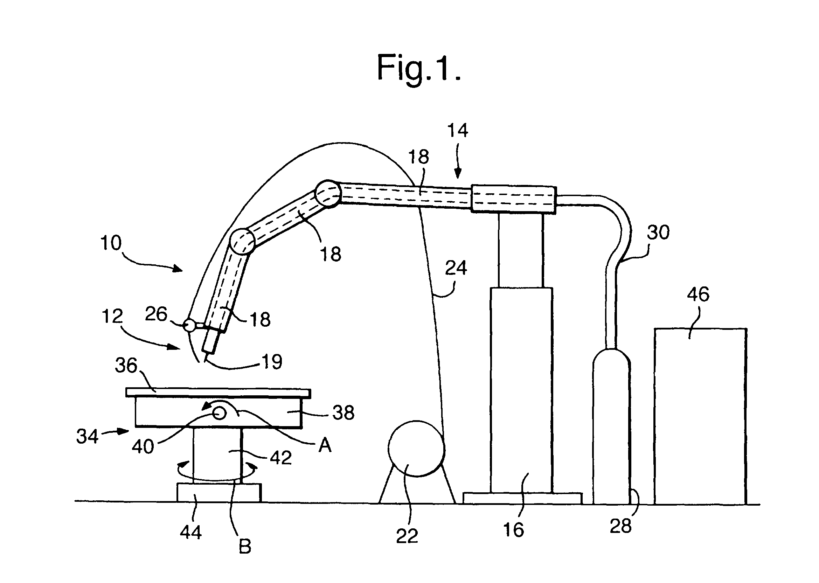

Referring to Fig. 1, there is shown an apparatus 10 for forming a body by deposition of a weld material. The apparatus 10 includes an arc welding head 12, mounted on a free end of a support mechanism in the form of a robot arm 14. The robot arm 14 includes a base member 16 on which are pivotally mounted a plurality of sections 18 which are rotatable relative to one another and about their own axes so that the welding head 12 can be manipulated to any desired position. The welding head 12 includes a first electrode 19.

A supply of a metal wire 24 is provided, in the form of a reel 22 around which the wire 24 is wound. The metal is in the form of a titanium alloy, for example titanium 6/4 which includes 6% aluminium and 4% vanadium, although many other alloys could be used. The wire 24 is fed from the reel 22 to the welding head 12 such that an end of the wire 24 is held just below the tip of the welding head 12. The wire 24 is held in place by suitable holding means 26.

The apparatus 10 also includes a supply of an inert gas, stored in a cylinder 28. A pipe 30 leads from the cylinder 28 to the welding head 12 through the sections 18. The gas is any suitable inert gas or gases or combinations of inert and active gases, for example argon or argon/carbon dioxide, and provides the medium in which an arc is formed, as will be explained below.

Support means 34 is provided beneath the welding head 12 and includes a turntable 36 mounted upon a platform 38. The platform 38 is pivotally mounted as indicated by the arrow A, by pivot 40, to a pedestal 42 which in turn is rotatably mounted, as indicated by the arrow B, upon a base member 44.

A support arrangement (not shown in Fig. 1) is mounted onto the turntable 36. The support arrangement includes a support member which provides a substrate upon which the material of the wire 24 is deposited to form the body. The support member constitutes a second electrode, the function of which is described in more detail below.

Control means in the form of a computer 46 controls the movement of the support means 34 and the robot arm 14, as well as controlling the supply of the inert gas, and the supply of the metal wire 24.

In operation, the turntable 36 and the welding head 12 are connected to a supply of electricity, and argon is fed via the pipe 30 from the cylinder 28 to the welding head 12 to form an argon shroud around the electrode of the welding head 12. The argon shroud extends to the substrate on which material is to be deposited (i.e. the support member or the part of the body being worked upon). The argon gas is ionised to form a plasma and an arc is created between the first electrode 19 in the welding head 12 and the substrate. The arc produces a high temperature, which is sufficient to melt the material of the substrate in the vicinity of the arc and to melt the end of the wire 24 which is also in the vicinity of the arc. This melted material from the wire 24 and the foundation plate 52 forms a molten weld pool.

The position of the welding head 12 relative to the turntable 36 is controlled by the computer 46 by manipulating both the position of the welding head 12, and the position of the turntable 36. The computer 46 also controls the rate of feeding of the wire 24. Thus, by appropriate manipulation of the welding head 12 relative to the turntable 36, a component, for example for use in a gas turbine engine, can be built up layer by layer by the deposition of the weld material from the wire 24. As will be appreciated when the body is partially formed, the welding head 12 deposits material on the body rather than the support member. In this case, the shroud extends from the welding head 12 to the part of the body being formed and the arc is created between the welding head 12 and the body. The term "substrate" is intended to cover either the support member or the body as appropriate.

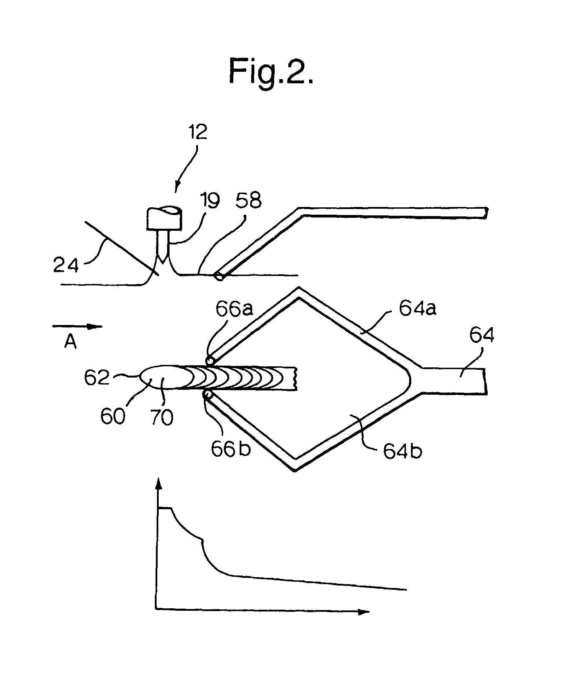

Fig. 2 illustrates in diagrammatic detailed form the welding head 12, including the electrode 19, and the end of the filler wire 24, above the substrate 58. In Fig. 2, assuming that the welding head 12 remains stationary, the substrate 58 is moved in the direction of the arrow A.

The weld pool 60 is illustrated in plan view, under the head 12 in Fig. 2. The weld pool 60 includes a boundary 62 defined by the interface between the molten substrate of the weld pool and the solid material surrounding it.

A pipe 64 is provided for supplying an inert gas in the form of argon at cryogenic temperatures. The pipe 64 splits into two smaller, elbow shaped pipes 64a and 64b, in order to supply cryogenic argon to two spaced regions behind a rear part of the boundary 62 of the weld pool 60.

It may be seen that as the substrate moves to the right in Fig. 2, the material to the right of the weld pool is constantly cooling and solidifying.

Open ends 66a, 66b of the pipes 64a and 64b are located just behind a rear part 68 of the boundary 62 of the weld pool 60. The pipe ends 66a, 66b are typically between 12mm and 20mm from a centre region 70 of the weld pool.

Two heat exchangers (not illustrated in the drawings) are provided for supplying argon at a temperature of about -100°C. A first, larger, heat exchanger reduces the temperature of the argon to about -110°C. The argon is then passed to a smaller heat exchanger near to the welding apparatus and, by the time it reaches this second heat exchanger, its temperature is about -90°C. The smaller heat exchanger then reduces the temperature of the argon to about -100°C. The temperature of the argon may be varied, and the optimum temperature will depend upon the material being welded and its particular kinetics of solidification. The temperature will be in the range of -60°C to -110°C, depending upon the material. Increasing the volumetric flow rate of the gas tends to decrease its effective temperature as it impinges on the substrate due to increased Reynolds number and Nusselt values.

In operation, as welding takes place, the cooled argon is provided through the pipes 64, 64a and 64b and expelled in a turbulent state at the region just behind the weld pool.

Typically, the weld material is titanium 6/4 which is an alloy of titanium including 6% aluminium and 4% vanadium. Pure titanium has a crystal structure which is close packed hexagonal below 882°C (termed the α phase) and body centred cubic above 882°C (termed the β phase). In the above alloy, vanadium has a body centred cubic structure and stabilises the body centred cubic structure within the titanium (it is therefore termed a β stabiliser). Aluminium on the other hand has a face centred cubic structure which is close packed and which stabilises the hexagonal close packed crystal structure of the titanium (the aluminium is referred to an α stabiliser).

Alloys of titanium including vanadium and aluminium change gradually from a body centred cubic to a close packed hexagonal structure as they cool, depending on the exact amounts of aluminium and vanadium present. Grain growth occurs much more in the body centred cubic structure than in the hexagonal close packed, because of its more open structure. It has been found that if the cooling material is quenched such that it passes through the temperature at which it switches from body centred cubic to close packed hexagonal (the β transus point) extremely fast, grain growth is inhibited. This results in the structure having a higher proportion of body centred cubic crystal structure than it would have if it had been cooled slowly. This makes the structure meta stable and puts it under strain.

According to the invention, the rapid chilling of the region just behind the weld pool with argon at cryogenic temperatures causes the titanium alloy to switch rapidly from body centred cubic to hexagonal and results in more of the material remaining in a body centred cubic structure as discussed above. This chilling effect also suppresses "epitaxial" growth that is indicative of fusion welding. The material tends to remain in this stressed state as it moves away from the welding head. However, the nature of the welding process is such that the material will eventually come under the welding head once again as the next layer of material is built up on top of it. At this point the substrate is heated and this allows some of the strain to be released. This creates a nucleation of new grains.

The above process tends to avoid the formation of grain boundaries on top of one another as the various layers are built up to form the structure. Normally, grain boundaries contain impurities which form nucleation points (inoculants) for further nucleation. Thus, as a layer of weld material is deposited, its grain boundaries tend to form above the grain boundaries of the previous layer. This results in the material growing upwardly in columns, thus forming a weak structure. The process according to the invention as described above tends to cause the nucleation of new grains within the layer below the layer being deposited and tends to minimise the above columnar growth. In addition, the very rapid cooling of the material in general suppresses grain growth and results in a finer grain structure. It suppresses competitive growth and minimises epitaxial growth through the structure.

There is thus provided an apparatus and method for building up a component which has improved structural properties.

Various modifications may be made to the above described embodiment without departing from the scope of the invention. The size of the weld pool and the distance between the centre of the weld pool and the point at which the low temperature gas is provided will depend upon the weld material used and the arc energies of the process. Alternative gasses to argon may be used.

## Claims

1. Apparatus (10) for forming a body by the deposition of a weld material (24), the apparatus (10) including:
a welding head (12);
a support member (34) on which the body is tc be deposited;
means (26) for supplying a weld material (24) to be deposited;
means for providing a flow of current between the welding head (12) and a substrate in the form of the support member (34) or the partially formed body, thereby melting the weld material (24) and forming a molten weld pool (60) in the substrate; **characterised in that** means (28) are provided to supply an inert gas at a temperature of less than -50°C to a region of the substrate at or near to the weld pool (60), to rapidly cool that region of the substrate.

2. Apparatus according to claim 1, **characterised in that** the means (28) for providing the inert gas includes means for providing the gas at a temperature of less than -95°C.

3. Apparatus according to claim 1 or claim 2, **characterised in that** the apparatus (10) includes means for moving the welding head relative to the substrate, in order to move the weld pool (60) along the substrate.

4. Apparatus according to any preceding claim, **characterised in that** the weld pool includes a boundary (62) defined by the interface between the molten material of the weld pool (60) and the surrounding solid material, the boundary of the weld pool (60) including a front part and a rear part defined by the movement of the weld pool (60), and wherein the apparatus includes means (64) for providing the low temperature inert gas behind a rear part of the weld pool (60) boundary.

5. Apparatus according to any preceding claim, **characterised in that** means (64a,64b) are included for providing the low temperature inert gas to more than one region at or near the weld pool (60).

6. Apparatus according to any preceding claim, **characterised in that** means are included providing a turbulent flow of inert gas to the weld pool (60).

7. Apparatus according to any preceding claim, **characterised in that** the means (28) for providing the low temperature inert gas includes a heat exchanger.

8. A method for forming a body by the deposition of a weld material (24), the method including the steps of:
providing a welding head (12);
providing a support member (34) on which the weld material (24) is to be deposited;
supplying a weld material (24) to be deposited;
providing a flow of current between the welding head (12)and a substrate in the form of the support member (34) or the partially formed body, thereby melting the weld material (24) and forming a molten weld pool (60) in the substrate; **characterised in that** an inert gas is provided at a temperature of less than -50°C to a region near the weld pool (60), to rapidly cool the substrate material **in that** region.

9. A method according to claim 8, **characterised in that** there is included the step of moving the welding head (12) relative to the substrate, so that the weld pool (60) moves along the substrate.

10. A method according to claim 8 or claim 9, **characterised in that** there is included the step of providing a turbulent flow of inert gas at a low temperature to the region at or near the weld pool (60).

11. A method according to any of claims 8 to 10, **characterised in that** there is included the step of providing inert gas in such a region and at such a temperature that, for the particular weld material (24) being used, it causes a rapid transition from one crystal structure to an alternative crystal structure.

12. A method according to claim 11 **characterised in that** the weld material (24) is a titanium alloy, the first crystal structure is body centred cubic and the second crystal structure closed packed hexagonal.

## Patentansprüche

1. Vorrichtung (10) zur Erzeugung eines Werkstücks durch Ablagerung eines Schweißmaterials (24), wobei die Vorrichtung (10) die folgenden Teile umfasst:
- einen Schweißkopf (12);
- einen Tragkörper (34), auf dem das Werkstück abgelagert werden soll;
- Mittel (26) zur Zuführung eines Schweißmaterials (24), das abgelagert werden soll;
- Mittel, durch die ein Strom zwischen dem Schweißkopf (12) und einem Substrat in Form des Tragkörpers (34) oder des teilweise erzeugten Werkstücks angelegt wird, wodurch das Schweißmaterial (24) geschmolzen und ein geschmolzenes Schweißbad (60) in dem Substrat erzeugt wird;
**dadurch gekennzeichnet, dass** Mittel (28) vorgesehen sind, um ein inertes Gas mit einer Temperatur von weniger als -50°C einem Bereich des Substrates oder in der Nähe des Schweißbades (60) zuzuführen, um jenen Bereich des Substrates schnell abzukühlen.

2. Vorrichtung nach Anspruch 1,
**dadurch gekennzeichnet, dass** die Mittel (28) zur Zuführung des inerten Gases Mittel aufweisen, die das Gas mit einer Temperatur von weniger als -95°C zuführen.

3. Vorrichtung nach Anspruch 1 oder Anspruch 2,
**dadurch gekennzeichnet, dass** die Vorrichtung (10) Mittel aufweist, um den Schweißkopf relativ zu dem Substrat zu bewegen, damit das Schweißbad (60) längs des Substrates bewegt wird.

4. Vorrichtung nach einem der vorhergehenden Ansprüche,
**dadurch gekennzeichnet, dass** das Schweißbad eine Abgrenzung (62) aufweist, die durch die Zwischenfläche zwischen dem geschmolzenen Material des Schweißbades (60) und dem umgebenden festen Material definiert wird, wobei die Abgrenzung des Schweißbades (60) einen Frontteil und einen rückwärtigen Teil aufweist, der durch die Bewegung des Schweißbades (60) definiert wird und wobei die Vorrichtung Mittel (64) aufweist, um das inerte Gas niedriger Temperatur hinter einen rückwärtigen Teil der Abgrenzung des Schweißbades (60) zu leiten.

5. Vorrichtung nach einem der vorhergehenden Ansprüche,
**dadurch gekennzeichnet, dass** Mittel (64a, 64b) vorhanden sind, um das inerte Gas niedriger Temperatur mehr als einem Bereich am Schweißbad (60) oder in der Nähe desselben zuzuführen.

6. Vorrichtung nach einem der vorhergehenden Ansprüche,
**dadurch gekennzeichnet, dass** Mittel vorgesehen sind, um eine turbulente Strömung des inerten Gases nach dem Schweißbad (60) zu schaffen.

7. Vorrichtung nach einem der vorhergehenden Ansprüche,
**dadurch gekennzeichnet, dass** die Mittel (28), die das inerte Gas niedriger Temperatur zuführen, einen Wärmeaustauscher umfassen.

8. Verfahren zur Erzeugung eines Werkstücks durch die Ablagerung von Schweißmaterial (24), wobei das Verfahren die folgenden Schritte umfasst:
es wird ein Schweißkopf (12) vorgesehen;
es wird ein Tragkörper (34) vorgesehen, auf dem das Schweißmaterial (24) abgelagert werden soll;
es wird ein Schweißmaterial (24) zugeführt, das abgelagert werden soll;
es wird ein Strom zwischen dem Schweißkopf (12) und einem Substrat in Form des Tragkörpers (34) oder des teilweise hergestellten Werkstücks angelegt, wodurch das Schweißmaterial (24) geschmolzen und ein geschmolzenes Schweißbad (60) in dem Substrat erzeugt wird,
**dadurch gekennzeichnet, dass** ein inertes Gas mit einer Temperatur von weniger als -50°C nach dem Bereich in der Nähe des Schweißbades (60) zugeführt wird, um schnell das Substratmaterial in jenem Bereich abzukühlen.

9. Verfahren nach Anspruch 8,
**dadurch gekennzeichnet, dass** es den Schritt aufweist, den Schweißkopf (12) relativ zu dem Substrat zu bewegen, so dass sich das Schweißbad (60) längs des Substrates bewegt.

10. Verfahren nach Anspruch 8 oder Anspruch 9,
**dadurch gekennzeichnet, dass** es den Schritt aufweist, eine turbulente Strömung eines inerten Gases mit niedriger Temperatur nach dem Bereich des Schweißbades (60) oder in die Nähe hiervon zu überführen.

11. Verfahren nach einem der Ansprüche 8 bis 10,
**dadurch gekennzeichnet, dass** es den Schritt aufweist, ein inertes Gas in einem solchen Bereich und mit einer solchen Temperatur einzuführen, dass für das jeweils benutzte spezielle Schweißmaterial (24) ein schneller Übergang von einer Kristallstruktur in eine andere Kristallstruktur verursacht wird.

12. Verfahren nach Anspruch 11,
**dadurch gekennzeichnet, dass** das Schweißmaterial (24) eine Titanlegierung ist und die erste Kristallstruktur eine kubisch raumzentrierte Struktur und die zweite Kristallstruktur eine dicht gepackte hexagonale Struktur ist.

## Revendications

1. Appareil (10) pour former un corps par la déposition d'un matériau de soudure (24), l'appareil (10) incluant:
une tête de soudure (12) ;
un organe support (34) sur lequel le corps doit être déposé ;
des moyens (26) pour fournir du matériau de soudure (24) devant être déposé ;
des moyens pour fournir un écoulement de courant entre la tête de soudure (12) et un substrat sous la forme de l'organe support (34) ou le corps formé partiellement, faisant ainsi fondre le matériau de soudure (24) et formant un bain de fusion de soudure (60) dans le substrat ; **caractérisé en ce que** des moyens (28) sont prévus pour fournir un gaz inerte à une température inférieure à -50°C vers une région du substrat au niveau ou proche du bain de fusion (60), pour refroidir rapidement cette région du substrat.

2. Appareil selon la revendication 1, **caractérisé en ce que** les moyens (28) pour fournir le gaz inerte incluent des moyens pour fournir le gaz à une température inférieure à -95°C.

3. Appareil selon la revendication 1 ou 2, **caractérisé en ce que** l'appareil (10) inclut des moyens pour déplacer la tête de soudure par rapport au substrat, de façon à déplacer le bain de soudure (60) le long du substrat.

4. Appareil selon l'une quelconque des revendications précédentes, **caractérisé en ce que** le bain de soudure inclut une limite (62) définie par l'interface entre le matériau fondu du bain de soudure (60) et le matériau solide environnant, la limite du bain de soudure (60) incluant une partie avant et une partie arrière définies par le mouvement du bain de soudure (60), et dans lequel l'appareil inclut des moyens (64) pour fournir du gaz inerte de faible température derrière une partie arrière de la limite du bain de soudure (60).

5. Appareil selon l'une quelconque des revendications précédentes, **caractérisé en ce que** les moyens (64a, 64b) sont inclus pour fournir le gaz inerte de faible température à plus d'une région au niveau ou proche du bain de soudure (60).

6. Appareil selon l'une quelconque des revendications précédentes, **caractérisé en ce que** des moyens sont inclus fournissant un écoulement turbulent de gaz inerte au bain de soudure (60).

7. Appareil selon l'une quelconque des revendications précédentes, **caractérisé en ce que** les moyens (28) pour fournir le gaz inerte de faible température incluent un échangeur thermique.

8. Procédé pour former un corps par la déposition d'un matériau de soudure (24), le procédé incluant les étapes de :
fournir une tête de soudure (12) ;
fournir un organe support (34) sur lequel le matériau de soudure (24) doit être déposé ;
alimenter un matériau de soudure (24) devant être déposé ;
fournir un écoulement de courant entre la tête de soudure (12) et un substrat sous la forme de l'organe support (34) ou le corps formé partiellement, faisant ainsi fondre le matériau de soudure (24) et formant un bain de fusion de soudure (60) dans le substrat ; **caractérisé en ce qu'**un gaz inerte est fourni à une température inférieure à -50°C à une région proche du bain de soudure (60), pour refroidir rapidement le matériau de substrat dans cette région.

9. Procédé selon la revendication 8, **caractérisé en ce qu'**il est inclut une étape pour déplacer la tête de soudure (12) par rapport au substrat, de sorte que le bain de soudure (60) se déplace le long du substrat.

10. Procédé selon la revendication 8 ou 9, **caractérisé en ce qu'**il est inclut l'étape de fournir un écoulement turbulent de gaz inerte à une température faible à la région au niveau ou proche du bain de soudure (60).

11. Procédé selon l'une quelconque des revendications 8 à 10, **caractérisé en ce qu'**il est inclut l'étape de fournir du gaz inerte dans une telle région et à une telle température que, pour le matériau de soudure particulier (24) utilisé, il entraîne une transition rapide depuis une structure cristalline vers une structure cristalline alternative.

12. Procédé selon la revendication 11, **caractérisé en ce que** le matériau de soudure (24) est un alliage de titane, la première structure cristalline est un corps cubique centré et la seconde structure cristalline est hexagonale compacte fermée.
